# EUROPÄISCHE PATENTANMELDUNG

(11) **EP 3 266 585 A1**
(43) Veröffentlichungstag der Anmeldung: **10.01.2018**
(21) Anmeldenummer: 17179544.6
(22) Anmeldetag: 04.07.2017
(51) Int. Cl.: B29C 45/27, F16H 55/06, B29C 45/28

(54) **KUNSTSTOFFVERZAHNUNGSTEIL**

(30) Priorität: 06.07.2016 CH 8582016
(71) Anmelder: Honginvest AG, 4514 Lommiswil (CH)
(72) Erfinder: Hunziker, Kilian, 4514 Lommiswil (CH)
(74) Vertreter: Schneider Feldmann AG Patent- und Markenanwälte

(57) **Zusammenfassung**

Bei einem Kunststoffverzahnungsteil (1) welches spritzgusstechnisch hergestellt ist, umfassend einen Zahnradkörper (2) mit einem kreisförmigen Zahnkranz (3), ist es vorgesehen, dass der Zahnradkörper (2) eine kreisringförmige Angussstelle (4) mit definierter Oberfläche aufweist, wobei die kreisringförmige Angussstelle (4) mit dem kreisförmigen Zahnkranz (3) und dessen Drehachse (A) konzentrisch angeordnet ist und mittels einer einen Hülsenverschluss aufweisenden Heisskanaldüse gefertigt ist.

## Beschreibung

### Technisches Gebiet

Die Erfindung betrifft ein spritzgusstechnisch hergestelltes Kunststoffverzahnungsteil mit mindestens einem kreisförmigen Zahnkranz.

### Technischer Hintergrund

Verzahnungsteile, insbesondere für Automobile, stellen hohe Anforderungen an Rundheit, Festigkeit, Temperaturbeständigkeit und Verzahnungspräzision. Diese werden heutzutage meist als Kunststoffverzahnungsteile spritzgusstechnisch hergestellt, weil sie im Unterschied zu metallischen Verzahnungsteilen wesentlich geräuscharmer sind.

Häufig weisen die Verzahnungsteile im Zentrum Aussparungen oder eine Durchgangsöffnung für eine Achse oder ein umspritztes Metallteil, z.B. eine Metallachse, auf, so dass sie nicht mittig angespritzt werden können. Solche Kunststoffverzahnungsteile, wie beispielsweise aus WO07050397 oder CH628769 bekannt, werden mit einem sogenannten Anguss-Unterverteiler gespritzt, welcher das Verzahnungsteil an einem oder mehreren über einen Kreis gleichmässig verteilten Angusspunkten anspritzt, um die Schmelze gleichmässig in der Form zu verteilen. Nach dem Spritzgussvorgang wird der Anguss-Unterverteiler durch den Entformprozess abgerissen. Solche Verzahnungsteile sind bereits heute durch vorhergehende Iterationen präzise und recht geräuscharm.

Aus JP2008265016, DE102011079423 und EP0712708 sind Kunststoffverzahnungsteile bekannt, bei welchen das Teil über einen sog. Schirmanguss ringförmig angespritzt wird. Damit der Anguss-Unterverteiler nach dem Spritzgussvorgang abgerissen werden kann, ist der ringförmige Kanal zwischen Anguss-Unterverteilung und der eigentlichen Kavität sehr schmal ausgestaltet. Diese schmale Angussstelle wirkt als Sollbruchstelle, welche ein Abreissen begünstigt. Beim Abreissen des Anguss-Unterverteilers entstehen jedoch immer Unregelmässigkeiten an der auf dem Spritzgussteil erkennbaren ringförmigen Angussstelle, die sich wiederum negativ auf die Laufruhe des Kunststoffverzahnungsteils auswirken können.

Da jedoch die Innenräume von Automobilen immer geräuscharmer werden, steigen auch die Anforderungen an geräuscharmen Kunststoffverzahnungsteilen.

### Darstellung der Erfindung

Eine Aufgabe der Erfindung besteht darin, die Kunststoffverzahnungsteile noch geräuscharmer zu machen.

Diese Aufgabe wird durch ein Kunststoffverzahnungsteil mit den Merkmalen des Anspruch 1 gelöst. Das Kunststoffverzahnungsteil mit einem kreisförmigen Zahnkranz, welches spritzgusstechnisch hergestellt ist, weist eine kreisringförmige Angussstelle auf, die mit dem kreisförmigen Zahnkranz konzentrisch angeordnet ist. Das Kunststoffverzahnungsteil ist mittels einer einen Hülsenverschluss aufweisenden Heisskanaldüse gefertigt, so dass die Angussstelle eine definierte Oberfläche aufweist.

Obwohl die bekannten Teile bereits heute sehr präzise und geräuscharm sind, haben die Erfinder erkannt, dass bereits geringe Abweichungen von einem exakt kreisförmigen Zahnkranz zu erhöhter Lärmentwicklung führen kann. Für eine möglichst geräuscharme Abwälzung der Verzahnungsteile sind daher sehr enge Toleranzeinhaltungen für den Zahnkranz in Bezug auf die Rotationsachse gefordert. Weiter wurde festgestellt, dass eine Anspritzung über mehrere Angusspunkte bei der Herstellung zu Inhomogenitäten im Werkzeuginnendruck führen können. Solche Inhomogenitäten führen zu grösserem Verzug und dadurch zu ungleichen Schwindungen im Bereich des kreisförmiges Zahnkranzes. Bis zu einem Grad wird dies durch eine oder mehrere aufwendige Werkzeugiterationen bestmöglichst kompensiert. Zurück bleibt ein leichter Verzug in radialer und axialer Richtung, der dennoch dazu führt, dass der Zahnkranz von der exakten Kreisform abweicht, was die Abwälzung der Verzahnung und somit die Geräuschbildung negativ beeinflusst. Bei Kunststoffverzahnungsteilen mit einer erfindungsgemässen kreisringförmigen Angussstelle mit definierter Oberfläche kann hingegen bei der Herstellung eine rotationssymmetrische Füllung der entsprechenden Kavität erreicht werden, was wiederum zu einer homogeneren Werkzeuginnendruckverteilung führt. Auf diese Weise können Kunststoffverzahnungsteile mit einer wesentlich höheren Rundlaufgenauigkeit hergestellt werden, was sich positiv auf die Lärmentwicklung auswirkt. Kunststoffverzahnungsteile mit einer kreisringförmigen Angussstelle sind wesentlich geräuscharmer als die bekannte mit mehreren kreisförmig angeordneten Angusspunkten.

Der Erfindung liegt weiter die Erkenntnis zugrunde, dass bereits geringfügige Unregelmässigkeiten an einer ringförmigen Angussstelle resp. Anbindungsstelle, welche durch ein Abreissen eines ringförmigen Angusssystems entstehen, zu einer unerwünschten Unwucht führen, die sich negativ auf die Laufruhe resp. Geräuschentwicklung auswirkt. Unter Verwendung einer Heisskanaldüse mit Hülsenverschluss können solche Unregelmässigkeiten verhindert werden, indem die Angussstelle beim Schliessen der Heisskanaldüse am Ende des Spritzvorgangs mit der Stirnfläche der Verschlusshülse geglättet wird. D.h. die Stirnfläche des Hülsenverschlusses definiert entsprechend die Oberfläche der Angussstelle, welche bevorzugt gleichmässig, typischerweise glatt ausgebildet ist. Ein Anguss, welcher nach dem Spritzvorgang entfernt werden muss, ist nicht vorhanden. Mit Angussstelle ist entsprechend der Bereich des Spritzgussteils gemeint, welcher durch den Anschnitt, d.h. der Querschnitt der Düse beim Eintritt in die Kavität, ausgebildet wird.

Ein weiterer Vorteil besteht in der grösseren Ausgestaltung der Düsenöffnung resp. des Anschnitts im Vergleich zu Systemen mit Schirmanguss. Dadurch kann die Einspritzung schneller und mit weniger Druck erfolgen. Zudem erlaubt die grössere Düsenöffnung eine längere Nachdruckzeit, um die Schwindung des Massevolumens der erkaltenden Schmelze auszugleichen. All dies führt zu einer besseren und gleichmässigeren Füllung der Kavität und somit zu weniger Spannungen, welche sich ebenfalls negativ auf die Laufruhe des Kunststoffverzahnungsteils auswirken.

Dabei sei erwähnt, dass Angussstellen oder Angusspunkte bei jedem spritzgusstechnisch hergestellten Erzeugnis unvermeidbar und am Erzeugnis selbst immer erkennbar sind.

Ein weitere Vorteil besteht darin, dass bei den erfindungsgemässen Kunststoffverzahnungsteilen Fliessnahtbildung und dadurch schlechte Bindenahtfestigkeiten vermieden werden. Auch wird bei der Verwendung von mit Fasern angereicherten Schmelzen eine gleichmässigere Faserorientierung erreicht. Beide Effekte führen zu erhöhten Festigkeiten des Kunststoffverzahnungsteils.

In einigen Ausführungsformen kann das Kunststoffverzahnungsteil im Bereich der Drehachse eine mit dem Zahnkranz konzentrische Durchgangsöffnung, beidseitige Aussparungen oder mit dem Zahnradkörper umspritztes Metallteil, insbesondere eine Metallachse, aufweisen. Die Aussparungen oder Durchgangsöffnungen können zur Aufnahme einer Achse oder Spindel dienen. Solche Teile können nicht an einem mit dem Zahnkranz konzentrischen Punkt angespritzt werden, weshalb eine kreisringförmige Angussstelle in solchen Fällen besonders gut geeignet ist.

In einigen Ausführungsformen kann der Zahnradkörper eine geschlossene Scheibe (mit oder ohne zusätzlichen Rippen) umfassen, d.h. er weist keine Löcher auf, die zu eine Aufteilung und anschliessenden Zusammenführung des Schmelzstroms führen würden. Die Scheibe kann eine im wesentlichen gleichmässigen Dicke aufweisen und schliesst direkt an den Zahnkranz an. Das Kunststoffverzahnungsteil kann dann beidseitig der Angussstelle ein etwa gleich grosses Teilvolumen aufweisen.

In einigen Ausführungsformen kann der Zahnradkörper einen länglicher Kreiszylinder umfassen. Der Kreiszylinder kann ein- oder beidseitig in axialer Richtung über den Zahnkranz hinausragen. Die Angussstelle kann auf einer abgeschrägten umlaufenden Kante des Kreiszylinders angeordnet sein. Auf diese Weise kann der Schmelzestrom in Bezug auf die Längsachse des Kreiszylinders schräg zur Längsachse hin eingespritzt werden, was zu einer homogeneren Schmelzeverteilung führt.

In einigen Ausführungsformen kann die Durchgangsöffnung oder der Kreiszylinder als Spindelmutter ausgebildet sein.

In einigen Ausführungsformen kann das Kunststoffverzahnungsteil aus zwei unterschiedlichen Schmelzen mehrschichtig mittels Koinjektion hergestellt sein, wobei eine erste Schmelze eine Kernschicht ausbildet, welche von der zweiten Schmelze umschlossen ist. Dabei kann die Kernschicht aus rezykliertem Kunststoff bestehen. Zusätzlich oder alternativ kann der Kunststoff der ersten Schmelze andere Eigenschaften als der Kunststoff der zweiten Schmelze aufweisen. Die Kunststoffe können unterschiedliche Festigkeiten, Materialpreise, Additive (z.B. Schmiermittel wie PTFE in der äusseren Kunststoffschicht oder Fasern), Verzugs- und Schwindungsverhalten aufweisen.

Als Kunststoff kommen in der Regel Polyoxymethylen (POM), Polyphenylensulfid (PPS) oder Polyamid (PA) zum Einsatz. Diese können glas- oder kohlefaserverstärkt gefertigt sein, wobei der Faseranteil bis 35 Gew.-%, in manchen Fällen bis zu 60 Gew.-% betragen kann. Um die Gleiteigenschaften der Verzahnungsteile zu verbessern, können diese zusätzlich bis zu 15 Gew.-% Polytetrafluorethylen (PTFE) enthalten.

Die Erfindung betrifft weiter ein Verfahren zur Herstellung eines vorangehend beschriebenen Kunststoffverzahnungsteils, welches kreisringförmig unter Verwendung einer Heisskanaldüse mit Hülsenverschluss an einer mit dem kreisförmigen Zahnkranz konzentrischen Angussstelle angespritzt wird. Zur Herstellung werden bevorzugt Heisskanal-Injektionsdüsen mit kreisringförmiger Düsenmündung und Ventilhülse resp. Hülsenverschluss eingesetzt.

Die Erfindung betrifft noch weiter eine Verwendung eines Spritzgusswerkzeugs mit einer Heisskanaldüsen, deren kreisringförmige Injektionsdüsenmündung mittels einer Ventilhülse verschliessbar ist, zur Herstellung eines vorangehend beschriebenen Kunststoffverzahnungsteils.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: perspektivische Ansichten eines Stufenzahnrads mit kreisringförmiger Angussstelle; und
- Fig. 2: unter (a) eine perspektivische Ansicht und unter (b) eine Schnittdarstellung einer Spindelmutter mit kreisförmigem Zahnkranz und kreisringförmiger Angussstelle.

### Wege zur Ausführung der Erfindung

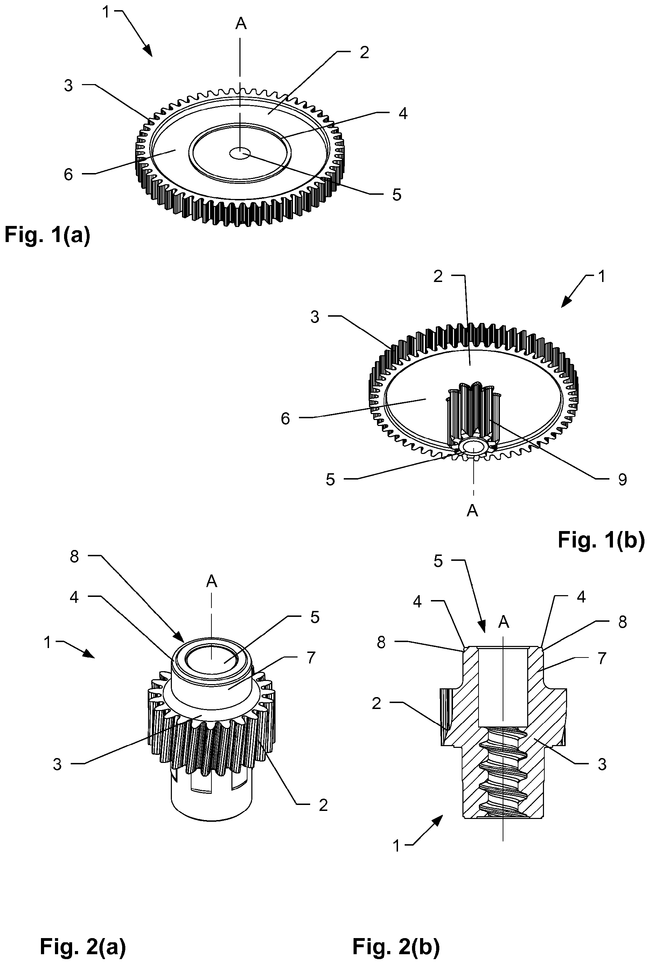

Fig. 1 zeigt ein als Stufenzahnrad ausgebildetes Kunststoffverzahnungsteil 1 umfassend einen scheibenförmigen Zahnradkörper 2 und einen peripheren, kreisförmigen Zahnkranz 3. Der Zahnradkörper 2 ist als geschlossen Scheibe 6 ausgebildet, d.h. er weist abgesehen von einer zentralen Durchgangsöffnung 5 keine Löcher auf. Auf einer Seite der Scheibe 6 ist eine konzentrischen Angussstelle 4 angeordnet (Fig. 1(a)). In der gezeigten Ausführungsform ist diese als umlaufende Rippe dargestellt.

In der gezeigten Ausführungsform weist das Kunststoffverzahnungsteil 1 auf der anderen Seite, d.h. der von der Angussstelle 4 abgewandten Seite, einen weiteren konzentrischen, kleineren Zahnkranz 9 auf (Fig. 1(b)).

Bei der spritzgusstechnischen Herstellung des Kunststoffverzahnungsteils 1 wird die eingespritzte Schmelze gleichmässig und rotationssymmetrisch über das gesamte Kunststoffverzahnungsteil 1 verteilt. Bevorzugt ist die Position der Angussstelle 4 derart gewählt, das die äussere Schmelzefront und die innere Schmelzefront den äusseren Zahnkranz 3 respektive das Ende des inneren, zweiten Zahnkranzes 9 gleichzeitig erreichen. D.h. die Teilvolumen des Kunststoffverzahnungsteils 1 sind beidseitig der kreisringförmigen Angussstelle 4 in etwa gleich, wobei natürlich aufgrund von Unterschieden in der Strömungsgeschwindigkeiten leicht unterschiedlich grosse Volumina resultieren können.

Fig. 2(a) und Fig. 2(b) zeigen ein als Spindelmutter ausgebildetes Kunststoffverzahnungsteil 1, welches einen kreiszylindrischen Zahnradkörper 2 aufweist. An der Manteloberfläche ist eine kreisförmiger Zahnkranz 3 ausgebildet.

In der gezeigten Ausführungsform ragt der Kreiszylinder 7 beidseitig in axialer Richtung über den Zahnkranz 2 hinaus. Der Kreiszylinder 7 weist zudem eine Durchgangsöffnung 5 für eine Spindel auf.

Die kreisringförmige Angussstelle 4 ist in der gezeigten Ausführungsform an einer abgeflachten, umlaufenden Kante 8 des Kreiszylinders 7 angeordnet, so dass bei der Herstellung die Schmelze zur Drehachse A hin geneigt einspritzbar ist.

### Bezeichnungsliste

- 1: Kunststoffverzahnungsteil
- 2: Zahnradkörper
- 3: kreisförmiger Zahnkranz
- 4: kreisringförmige Angussstelle
- 5: Durchgangsöffnung
- 6: Scheibe
- 7: Kreiszylinder
- 8: abgeschrägte Kante
- 9: Zahnrad
- A: Drehachse

## Patentansprüche

1. Kunststoffverzahnungsteil (1) welches spritzgusstechnisch hergestellt ist, umfassend einen Zahnradkörper (2) mit einem kreisförmigen Zahnkranz (3), wobei der Zahnradkörper (2) eine kreisringförmige Angussstelle (4) aufweist, die mit dem kreisförmigen Zahnkranz (3) und dessen Drehachse (A) konzentrisch angeordnet ist, **dadurch gekennzeichnet, dass** das Kunststoffverzahnungsteil mittels einer einen Hülsenverschluss aufweisenden Heisskanaldüse gefertigt ist, so dass die Angussstelle (4) eine definierte Oberfläche aufweist.

2. Kunststoffverzahnungsteil (1) nach Anspruch 1, **dadurch gekennzeichnet, dass** das Kunststoffverzahnungsteil (1) im Bereich der Drehachse (A) eine mit dem Zahnkranz konzentrische Durchgangsöffnung (5), beidseitige Aussparungen oder mit dem Zahnradkörper umspritztes Metallteil, insbesondere eine Metallachse, aufweist.

3. Kunststoffverzahnungsteil (1) nach einem der vorangehenden Ansprüche, **dadurch gekennzeichnet, dass** der Zahnradkörper (2) eine geschlossene Scheibe (6) umfasst.

4. Kunststoffverzahnungsteil (1) nach einem der Ansprüche 1 bis 2, **dadurch gekennzeichnet, dass** der Zahnradkörper (2) einen länglicher Kreiszylinder (7) umfasst.

5. Kunststoffverzahnungsteil (1) nach Anspruch 4, **dadurch gekennzeichnet, dass** die Angussstelle (4) auf einer abgeschrägten, umlaufenden Kante (8) des Kreiszylinders (7) angeordnet ist.

6. Kunststoffverzahnungsteil (1) nach Anspruch 5, **dadurch gekennzeichnet, dass** der Kreiszylinder (7) als Spindelmutter ausgebildet ist.

7. Kunststoffverzahnungsteil (1) nach einem der vorangehenden Ansprüche, **dadurch gekennzeichnet, dass** das Kunststoffverzahnungsteil (1) aus zwei unterschiedlichen Schmelzen mehrschichtig mittels Koinjektion hergestellt ist, wobei eine erste Schmelze eine Kernschicht ausbildet, welche von der zweiten Schmelze umschlossen ist.

8. Kunststoffverzahnungsteil (1) nach Anspruch 7, **dadurch gekennzeichnet, dass** die Kernschicht aus rezykliertem Kunststoff besteht.

9. Kunststoffverzahnungsteil (1) nach Anspruch 7 oder 8, **dadurch gekennzeichnet, dass** der Kunststoff der ersten Schmelze und der Kunststoff der zweiten Schmelze unterschiedliche Festigkeiten, Materialpreise, Additive wie Schmiermittel oder Fasern, oder Verzugs- und Schwindungsverhalten aufweisen.

10. Verfahren zur Herstellung eines Kunststoffverzahnungsteils (1) nach einem der vorangehenden Ansprüche, **dadurch gekennzeichnet, dass** es unter Verwendung einer Heisskanaldüse mit Hülsenverschluss kreisringförmig an einer mit dem kreisförmigen Zahnkranz (3) konzentrischen Angussstelle (4) angespritzt wird.
Verwendung eines Spritzgusswerkzeugs mit einer Heisskanaldüsen, deren kreisringförmige Injektionsdüsenmündung mittels einer Ventilhülse verschliessbar ist, zur Herstellung eines Kunststoffverzahnungsteils (1) nach einem der Ansprüche 1 bis 10.
